# EUROPEAN PATENT SPECIFICATION

(11) **EP 0 626 811 B1**
(45) Date of publication and mention of the grant of the patent: **17.12.1997**
(21) Application number: 93904242.0
(22) Date of filing: 22.02.1993
(51) Int. Cl.: A23L 1/36

(54) **PROCESS FOR PRODUCING REDUCED FAT NUTS**
VERFAHREN ZUR HERSTELLUNG VON NÜSSEN MIT REDUZIERTEM FETTGEHALT
PROCEDE DE PREPARATION DE NOIX A TENEUR REDUITE EN MATIERE GRASSE

(30) Priority: 25.02.1992 GB 9204001
(43) Date of publication of application: 07.12.1994
(73) Proprietor: Kraft Jacobs Suchard SA, CH-8008 Zürich (CH)
(72) Inventor: ZUMBE, Albert, CH-2003 Neuchâtel (CH); SCHENKEL, Hans-Jorg, CH-2017 Boudry (CH); MARTHE, Christian, CH-2615 Sonvilier (CH)
(74) Representative: Wise, Stephen James
(86) International application number: GB9300371
(87) International publication number: WO9316609

(56) References cited:
- WO-A-91/04678
- US-A- 3 294 549

## Description

This invention relates to a process for producing reduced fat (oil-depleted) nuts of a controlled and preferably increased volume by the use of microwave heating.

The term "nuts" as used herein refers to edible whole or half kernels of nuts such as hazelnuts, peanuts, almonds, Brazil nuts, pecans, walnuts and the like. For conciseness the following description will refer principally to the production of reduced fat whole hazelnuts. The principles of this invention are, however, equally applicable to other nuts as aforesaid.

In the following description percentages are percentages by weight unless indicated to the contrary.

The basic procedures for preparing reduced fat nuts for foodstuffs are well known. These involve the following major steps; pressing the nuts until the desired quantity of oil is removed, applying heated water or steam to the pressed nuts until they are restored towards their original size and shape, and then drying them to the required moisture content. The dried nuts may then be roasted, if desired. These steps are well described for peanuts in US-A- 3,294,549 to Vix et al who state that the resulting low fat, high protein peanuts have excellent flavour, texture and appearance, as well as good shelf life.

Unfortunately such reduced fat nuts tend to be smaller than the original nuts from which they were made and also tend to have inferior sensory qualities. In fact, following on from the disclosure by Vix et al, patents on reduced fat nuts have mainly concentrated on methods of improving their flavour. US-A-3,645,752 and US-A-3,740,336 to Baxley, US-A-4,049,833 to Gannis et al and GB-B-2,085,277 to Holloway and Wilkins are examples of such later patents. Thus the issue of size has been given little attention.

The present invention seeks to provide a process capable of producing reduced fat nuts of a controlled, and preferably larger, size than those obtainable by conventional production methods.

In accordance with the present invention there is provided a process for producing reduced fat nuts comprising pressing the nuts to remove a proportion of the oil therein, exposing the oil-depleted nuts to moisture to hydrate them to a desired degree, drying the hydrated nuts to a desired degree, and then optionally roasting them, wherein at least part of the drying and/or of the roasting when carried out is effected using microwave radiation.

The present invention discloses a method which enables larger reduced fat nuts of all varieties to be made. The nuts can be produced in either the dried or roasted form, but the key step is the use of microwave energy to dry and/or to roast the hydrated oil-depleted nuts. Although hot water or water vapour can be used for hydrating the nuts, a more rapid production method in accordance with a preferred embodiment of the present invention incorporates, in addition to microwave drying, steam hydration followed, optionally, by microwave roasting. A further advantageous feature of the process is that it can produce reduced fat nuts which are essentially free from contamination by bacteria, yeasts and moulds. The nuts can be blanched or unblanched, whole or split as desired. The desirable nutritional characteristics of reduced fat nuts can also be achieved using a process in accordance with the present invention.

It is far from clear why the use of microwave heating either for drying the hydrated nuts or roasting them results in an improved physical size of the nuts produced, but it may be speculated that it is connected with the internal generation of heat by microwaves rather than the surface heating produced in a conventional oven. It may further be speculated that the escape of steam from the central portion of the nut helps prevent shrinkage due to water loss.

Whatever the causes it has been discovered that the size of dried or roast reduced fat nuts can be controlled by modifying the hydration, drying and roasting stages. This discovery enables a choice of processing conditions to be made depending on the characteristics of the nut most desired. For example maximum flavour retention and largest size are associated with water hydration and microwave heating, whereas energy efficiency is favoured by steam hydration and microwave drying and roasting. These processes are described below with particular reference to hazelnuts.

In the first step raw or toasted hazelnuts, whole or split, are partially defatted according to methods known in the art. This may require pre-drying of the hazelnuts to a moisture content of about 3 to 8% by weight before pressing them. A mechanical press is then charged with blanched or unblanched hazelnuts and pressing continued until 20 to 90%, preferably from 50 to 75%, of the oil which is originally present is removed. The physically distorted hazelnuts, if unblanched, are then blanched by physical means to remove their skins. The nuts must then be hydrated.

In one embodiment of the invention, the pressed nuts are immersed in water at from 93 to 100°C, preferably 95 to 97°C, for a period of from 2 to 15 minutes, the actual period being the minimum necessary to allow the nuts to recover their original size. Additions of water-soluble ingredients can be made to the hydration water as is known in the art.

In an alternative and preferred embodiment of the present invention the blanched, pressed nuts are reconstituted to approximately their original size and shape in the following manner. The hazelnuts are transferred to a jacketed vessel to which steam can be injected and a vacuum applied. Steam at 0.5 to 5.0 bars, preferably 1 bar, is applied for from 0.5 to 5.0 minutes, preferably 2 minutes, at a temperature of 90 to 150°C, preferably 100°C, followed desirably by the application of a vacuum, giving a moisture content of from 10 to 20%, preferably about 14%, in the reflated oil-depleted nuts. The time and pressure of steaming are dependent among other things on the equipment used and the quantity, size and type of nuts used. A vacuum of the order of up to 0.01 bar for up to 5 minutes is generally suitable, with 0.06 bar for 120 seconds being preferred, in order to remove excess water from the nuts and to render the pressed nuts less likely to stick together. Other nut varieties require different conditions and are hydrated to different moisture contents as shown for almonds and peanuts in the Examples below.

The hydrated oil-depleted hazelnuts are then preferably transferred to a microwave oven and exposed to 250 to 5,000 watts for a period of from 0.5 to 5.0 minutes. Preferably the exposure for hazelnuts is 3,000 watts for 1 to 1 1/2 minutes for nuts which have been hydrated with steam but longer with nuts which have been hydrated with hot water. As a result of this process the moisture content of the nuts is reduced to about 6%.

These dried reduced-fat nuts may then be roasted by continuing the microwave heating process. In order to try to ensure uniformity of heating during roasting, either continuous microwave drying of agitated nuts may be used or a series of heating and mixing stages may be used as follows.

The microwave roasting treatment employs the same range of power as for drying and preferably 700 to 3,000 watts, with the preferred treatment for hazelnuts being 750 watts for 0.5 minutes followed by stirring around of the nuts and a repeat of this exposure and stirring followed by 750 watts for 0.5 minutes and stirring and finally a further 750 watts for 0.5 minutes. During this roasting treatment the nuts acquire the desired roast hazelnut taste and the moisture content is reduced to 1.5%.

The power and duration of the microwave treatments will need to be adjusted depending amongst other things on the weight of the batch, the size, the moisture content and the type of nut, and the type of microwave equipment used.

It will be clear that the present invention may involve four separate stages, removing oil from the nuts, hydration, drying and roasting. For expansion of the nuts microwave radiation is used for drying and/or roasting. Conventional heating can be used in addition to, or instead of, microwave heating if desired as long as microwave radiation is used for at least part of the drying and/or of the roasting stages.

Although the process of the present invention is described herein as consisting of separate stages in order to assist in its understanding, it will be appreciated that it can be a continuous rather than a batch process, which may offer further reductions in the duration of processing and may improve the uniformity of product.

A further aspect of the present invention concerns the extent to which the oil should be removed. In principle as much as possible of the oil should be removed that is compatible with a product of good sensory qualities. In practice, however, flavour, texture and mouthfeel are all affected to some extent by oil removal, and the effect increases with increasing removal of oil. It is thus preferable to have targets not based on sensory qualities which are notoriously difficult to measure with precision. The invention provides for two standards, both of which are related to consumer perception. They are firstly a minimum standard of at least 50% removal of oil from the nut, and secondly and preferably this at least 50% oil reduction in combination with a minimum 30% energy reduction for the roasted oil-depleted nut as compared to the original full fat nut. An example of hazelnuts meeting these criteria is presented below in Table I. It will be evident that in addition to the criteria given above the oil-depleted nut has about twice the protein and dietary fibre content of the original full fat nut.

**Table I**

| Nutrient | Full fat nuts | Oil-depleted Dried nuts | Oil-depleted Roasted nuts |
|---|---|---|---|
| Moisture % | 5.2 | 5.2 | 1.0 |
| Protein % | 13.9 | 28.1 | 29.3 |
| Fat % | 60.8 | 26.2 | 27.4 |
| Carbohydrate % | 10.4 | 21.0 | 21.9 |
| Dietary fibre % | 7.3 | 14.7 | 15.4 |
| Minerals % | 2.4 | 4.8 | 5.0 |
| Fat reduction % | - | 56.9 | 54.9 |
| Energy kcal/100g | 644 | 432 | 451 |
| Energy saving % | - | 32.9 | 30.0 |

Using standard data it can be shown that for roasted almonds a reduction in fat of about 57% would be necessary to meet the 30% energy reduction criterion, while for roasted peanuts a reduction in fat of about 66% would be required.

The main advantage of the present invention is to enable control of the size of oil-depleted nuts to be exercised and to be able to make larger oil-depleted nuts. An important aspect of oil-depleted nuts is their lower fat and calorie content. However, this is an actual consumer benefit only if the consumer eats the same or less weight of oil-depleted nuts as full fat nuts. Consumers of snack foods and confectionery are frequently guided by volume rather than by weight, so that to be effective oil-depleted nuts need to deliver the same or greater specific volume (ml/g) as full fat nuts. The present invention allows this criterion to be met.

The use of microwave heating to control the size of oil-depleted nuts brings other advantages. The direct advantage is that a shorter process time is needed compared with conventional heating. The indirect advantage is that it is possible to limit the degree of hydration of the pressed nuts, for example by steam hydration, and yet obtain a satisfactorily sized nut. The less the hydration that occurs, the less the water that has to be removed by drying and thus the more energy efficient the process.

While it is usually acknowledged that steam hydration leads to greater flavour loss than water hydration, the extent to which this is apparent in the practice of this invention is less than anticipated. Oil-depleted nuts formed using steam hydration followed by microwave drying and/or roasting have good sensory properties. In particular, oil-depleted almonds made by this process have excellent sensory properties.

A further advantage of the present invention is that the combination of steam treatment and microwave heating provides nuts of excellent bacteriological quality.

In addition the use of the present invention makes it possible to achieve lower fat and reduced calorie contents for reduced fat nuts as compared with full fat nuts without exceeding the preferred maximum fat reduction of 75%. Such fat reductions can be made and the nuts still have good sensory qualities.

Reduced fat nuts are useful as replacements for full fat nuts in whatever form they are currently used or in future may be utilised. They have the advantages compared with the full fat nuts of a higher protein and a higher dietary fibre content than the full fat nuts. One specific use is in improving the variety and sensory quality of low calorie confectionery, especially when used in combination with low calorie non-cariogenic sugar replacers like isomalt, lactitol, maltitol, polydextrose, inulin, and the like.

Despite their good natural flavour there is a preference by some consumers for flavoured nuts and the reduced fat nuts made according to the present invention are equally valuable as a base for such flavourings. For example, the nuts can be coated with fiavouring agents such as allspice, cinnamon, clove, sage, caraway bay, ginger and the like, either alone or in combination with condiments such as salt, pepper, monosodium glutamate, and the like. Moreover, texturisers such as glycerine, and binders such as natural gums, dextrins, gelatine, sugars, chocolate, and the like, are entirely compatible with reduced fat nuts.

The following Examples are presented for further illustration and explanation of the present invention and must not be taken as limiting the scope of the present invention in any regard.

### Example 1

The effect of the use of different heating methods on the characteristics of reduced fat nuts was examined in the following trial. A Montoliu vertical press was charged with Roman hazelnuts, size 9 to 11, moisture content 3%, fat content 58%, and a pressure of 420 kg/sq.cm. applied for 30 minutes at 50°C thereby removing 73% of the fat. These pressed low fat nuts were divided into seven portions. Each portion was subjected to a different series of hydration, drying and roasting treatments as shown in Table II. Hydration involved either the immersion of nuts in water at 96°C for 15 minutes or the injection of steam at 1 bar to nuts in a jacketed vessel for 90 seconds followed by application of a vacuum for 120 seconds at 0.06 bar to remove excess water from the nuts and to render the pressed nuts less likely to stick together. Drying was either performed in a conventional oven at 65°C for 4 1/2 hours or in a microwave oven for 2 1/4 minutes at 3000 watts. Roasting was performed either in performed either in a conventional oven at 130°C for 20 minutes or in a microwave oven by two successive applications of 750 watts for 30 seconds.

The size of the nuts after each treatment was assessed by estimating the specific volume of 800 nuts when placed in a 1 litre measuring cylinder, diameter 60 mm. The results are shown in Table II.

**Table II**

| Treatment | | | Specific Volume ml/nut | |
|---|---|---|---|---|
| Hydration | Drying | Roasting | Dried nuts | Roasted nuts |
| Water | Oven | Oven | 0.70 | 0.69 |
| Water | Oven | Microwave | 0.67 | 1.03 |
| Water | Microwave | Microwave | 1.00 | 0.97 |
| Steam | Oven | Oven | 0.63 | 0.59 |
| Steam | Oven | Microwave | 0.66 | 0.87 |
| Steam | Microwave | Oven | 0.75 | 0.73 |
| Steam | Microwave | Microwave | 0.74 | 0.74 |

For comparison the original hazelnuts had an average specific volume of 0.88 ml/nut and the pressed nuts 0.42 ml/nut.

Two effects are apparent. One is that the largest nuts are associated with water hydration rather than steam hydration, and the second is that microwave heating retained the size of the hydrated nuts better than conventional heating at both the drying and roasting stage.

The superiority of water hydration shown by these trials may be due to it providing complete hydration rather than the deliberately minimal hydration with steam. The effect of microwave heating in giving larger, reduced fat nuts was, however, totally unexpected.

### Example 2

A Montoliu vertical press was charged with Roman hazelnuts size 9 to 11 (5.4% moisture) and a pressure of 420 kg/sq.cm. applied for 30 minutes at 40°C thereby removing about 72% of the fat. The reduced fat nuts were transferred to a copper pan containing water at 96°C and were immersed in the water for 15 minutes to allow hydration to take place before removal from the pan.

The hydrated reduced fat nuts were then transferred to a Gygatherm microwave oven and 3,000 watts applied for 1 1/2 minutes. During this treatment the moisture content was reduced to 6.4% and the dried nuts were found to have recovered their size significantly from their pressed state. The nuts also had good sensory properties and were essentially free from contamination by bacteria, yeasts and moulds.

### Example 3

A Montoliu vertical press was charged with Roman hazelnuts size 9 to 11 (5.4% moisture) and a pressure of 420 kg/sq.cm. applied for 30 minutes at 40°C thereby removing about 72% of the fat. The reduced fat nuts were transferred to a pre-heated jacketed vessel at about 100°C into which live steam could be injected and a vacuum applied. Steam at 1 bar was injected for 2 minutes to allow reflation and hydration of the hazelnuts to a moisture content of about 14%. A vacuum was then applied for 120 seconds at 0.06 bar to remove excess water from the nuts and to render the pressed nuts less likely to stick together.

The hydrated reduced fat nuts were then transferred to a Gygatherm microwave oven and 3,000 watts applied for 1 minute. During this treatment the moisture content was reduced to 6.4% and the dried nuts were found to have recovered their size significantly from their pressed state. The nuts also had good sensory properties and were essentially free from contamination by bacteria, yeasts and moulds.

### Example 4

A Montoliu vertical press was charged with Californian almonds size 20 to 22 (5.5% moisture) and a pressure of 420 kg/sq.cm. applied for 30 minutes at 40°C thereby removing 62% of the fat. The reduced fat nuts were transferred to a pre-heated jacketed vessel at about 100°C to which steam could be injected and a vacuum applied. Steam at 1 bar pressure was injected for 2 minutes to hydrate the almonds to a moisture content of about 10%. A vacuum was then applied for 120 seconds at 0.06 bar to remove excess water from the nuts and to render the pressed nuts less likely to stick together.

The hydrated reduced fat almonds were then transferred to a Gygatherm microwave oven and 3,000 watts applied for 1.5 minutes. During this treatment the moisture content was reduced to 7.6% and the dried nuts were found to have recovered their size significantly from their pressed state. The nuts also had good sensory properties and were essentially free from contamination by bacteria, yeasts and moulds.

### Example 5

A Montoliu vertical press was charged with U.S. peanuts size 45 to 50 (2.7% moisture) and a pressure of 420 kg/sq.cm. applied for 30 minutes at 40°C, thereby removing 55% of the fat. The reduced fat nuts were transferred to a pre-heated jacketed vessel at about 100°C into which steam could be injected and vacuum applied. Steam at 1 bar pressure was injected for 2 minutes to hydrate the peanuts to a moisture content of about 10%. A vacuum was applied for 120 seconds at 0.06 bar to remove excess water from the nuts and to render the pressed nuts less likely to stick together.

The hydrated reduced fat peanuts were then transferred to a Gygatherm microwave oven and 3,000 watts applied for 2.5 minutes. During this treatment the moisture content was reduced to 5.2% and the dried nuts were found to have recovered their size significantly from their pressed state. The nuts also had good sensory properties and were essentially free from contamination by bacteria, yeasts and moulds.

### Example 6

A portion of the reduced fat hazelnuts from Example 2 were stirred in the microwave oven previously used and 750 watts applied for 1 minute. The nuts were then stirred again and a second treatment of 750 watts for 1 minute applied. The nuts were again stirred and 750 watts applied for 30 seconds followed by stirring and a second treatment of 750 watts for 30 seconds. The process produced roasted hazelnuts having a moisture content of 1.5% and a size slightly larger than the original full fat hazelnuts from which they were made.

### Example 7

A portion of the reduced fat hazelnuts from Example 3 were stirred in the microwave oven previously used and 750 watts applied for 1 minute. The nuts were then stirred again and a second treatment of 750 watts for 1 minute applied. The nuts were again stirred and 750 watts applied for 30 seconds followed by stirring and a second treatment of 750 watts for 30 seconds. The process produced roasted hazelnuts having a moisture content of 1.5% and a size slightly smaller than the original full fat hazelnuts from which they were made.

### Example 8

A portion of the reduced fat almonds from Example 4 were stirred in the previously used microwave oven and 750 watts applied for 1.5 minutes. The nuts were stirred again and 750 watts applied for 30 seconds before a final stir and a second application of 750 watts for 30 seconds. The process produced roasted almonds having a moisture content of 1.5% and a size only slightly smaller than the original full fat almonds from which they were made.

### Example 9

A portion of the reduced fat peanuts from Example 5 were stirred in the previously used microwave oven and 750 watts applied for 1 minute. This stirring and heating was repeated three times to give roasted peanuts having a moisture content of 1.5% and a size slightly smaller than the original full fat peanuts from which they were made.

### Example 10

Reduced calorie sugarfree Krokant was made by adding 275g of lactitol to a pan and applying low heat with constant stirring until the melt temperature reached 161°C. It was then allowed to cool to 127°C and O.5% of IFF caramel flavouring and 225g of the low-fat microwave roasted hazelnuts from Example 6 were quickly stirred into the melt. This was poured onto a cooling table and, while plastic formed or cut into shape.

## Claims

1. A process for producing reduced fat nuts comprising pressing the nuts to remove a proportion of the oil therein, exposing the oil-depleted nuts to moisture to hydrate them to a desired degree, drying the hydrated nuts to dry them to a desired degree, and then optionally roasting them, wherein at least part of the drying and/or of the roasting when carried out is effected using microwave radiation.

2. A process as claimed in claim 1 wherein the oil-depleted nuts are hydrated by subjecting them to steam.

3. A process as claimed in claim 2 wherein the nuts are subjected to steam at a pressure of from 0.5 to 5.0 bars for from 0.5 to 5.0 minutes at a temperature of from 90 to 150°C.

4. A process as claimed in any one of claims 1 to 3 wherein the hydration step includes the application to the moistened nuts of a vacuum of up to 0.01 bar for up to 5 minutes.

5. A process as claimed in claim 4 wherein a vacuum of 0.06 bar for 120 seconds is applied.

6. A process as claimed in any one of the preceding claims wherein the oil-depleted nuts are hydrated to a moisture content of from 10 to 20% by weight.

7. A process as claimed in any one of the preceding claims wherein the hydrated nuts are dried by subjecting them to microwave radiation at from 250 to 5,000 watts for a period of from 0.5 to 5.0 minutes.

8. A process as claimed in claim 7 wherein the hydrated nuts are dried to a moisture content of about 6% by weight.

9. A process as claimed in any one of the preceding claims wherein the nuts are pressed to remove from 20 to 90% by weight of the oil which is originally present.

10. A process as claimed in claim 9 wherein from 50 to 75% by weight of the oil originally present is removed.

11. A process as claimed in any one of the preceding claims wherein prior to pressing the nuts are pre-dried to a moisture content of from 3 to 8% by weight.

12. A process as claimed in any one of the preceding claims including the step of blanching the oil-depleted nuts to remove their skins prior to hydration.

13. A process as claimed in any one of the preceding claims wherein the microwave roasting is carried out at between 700 and 3,000 watts until the moisture content of the roasted nuts is about 1.5% by weight.

14. A process as claimed in any one of the preceding claims wherein the reduced fat, dried nuts are coated with at least one flavouring agent, condiment, texturiser or binder.

15. A process as claimed in any one of the preceding claims wherein the process is a continuous process.

16. A process as claimed in any one of the preceding claims wherein the nuts are hazelnuts.

17. A process as claimed in any one of the preceding claims wherein the energy content of the reduced fat nuts after roasting is at least 30% less than the energy content of the original full fat nuts.

## Patentansprüche

1. Verfahren zur Herstellung von Nüssen mit reduziertem Fettgehalt, wobei die Nüsse zur Entfernung eines Teils des darin enthaltenen Öls gepreßt werden, die Nüsse mit verringertem Ölgehalt einer Feuchtigkeit ausgesetzt werden, um sie auf ein gewünschtes Maß zu hydratisieren, die hydratisierten Nüsse getrocknet werden, um sie auf ein gewünschtes Maß zu trocknen, und dann wahlweise geröstet werden, wobei zumindest ein Teil der Trocknung und/oder Röstung, wenn diese durchgeführt wird, unter Verwendung von Mikrowellenstrahlung erfolgt.

2. Verfahren nach Anspruch 1, wobei die Nüsse mit verringertem Ölgehalt hydratisiert werden, indem sie Dampf ausgesetzt werden.

3. Verfahren nach Anspruch 2, wobei die Nüsse Dampf bei einem Druck von 0,5 bis 5,0 bar über 0,5 bis 5,0 Minuten bei einer Temperatur von 90 bis 150°C ausgesetzt werden.

4. Verfahren nach einem der Ansprüche 1 bis 3, wobei der Hydratisierungsschritt das Anlegen eines Vakuums von bis zu 0,01 bar über bis zu 5 Minuten an die befeuchteten Nüsse beinhaltet.

5. Verfahren nach Anspruch 4, wobei ein Vakuum von 0,06 bar über 120 Sekunden angelegt wird.

6. Verfahren nach einem der vorangehenden Ansprüche, wobei die Nüsse mit verringertem Ölgehalt auf einen Feuchtigkeitsgehalt von 10 bis 20 Gew.% hydratisiert werden.

7. Verfahren nach einem der vorangehenden Ansprüche, wobei die hydratisierten Nüsse getrocknet werden, indem sie einer Mikrowellenstrahlung von 250 bis 5000 Watt über einen Zeitraum von 0,5 bis 5 Minuten ausgesetzt werden.

8. Verfahren nach Anspruch 7, wobei die hydratisierten Nüsse auf einen Feuchtigkeitsgehalt von etwa 6 Gew.% getrocknet werden.

9. Verfahren nach einem der vorangehenden Ansprüche, wobei die Nüsse zur Entfernung von 20 bis 90 Gew.% des ursprünglich vorhandenen Öls gepreßt werden.

10. Verfahren nach Anspruch 9, wobei 50 bis 75 Gew.% des ursprünglich vorhandenen Öls entfernt werden.

11. Verfahren nach einem der vorangehenden Ansprüche, wobei die Nüsse vor dem Pressen auf einen Feuchtigkeitsgehalt von 3 bis 8 Gew.% vorgetrocknet werden.

12. Verfahren nach einem der vorangehenden Ansprüche, welches den Schritt des Enthäutens der Nüsse mit verringertem Ölgehalt zur Entfernung ihrer Haut vor dem Hydratisieren beinhaltet.

13. Verfahren nach einem der vorangehenden Ansprüche, wobei die Mikrowellenröstung bei 700 bis 3000 Watt ausgeführt wird, bis der Feuchtigkeitsgehalt der gerösteten Nüsse etwa 1,5 Gew.% beträgt.

14. Verfahren nach einem der vorangehenden Ansprüche, wobei die getrockneten Nüsse mit reduziertem Fettgehalt mit mindestens einem Aromastoff, Würzmittel, Strukturfestiger oder Bindemittel überzogen werden.

15. Verfahren nach einem der vorangehenden Ansprüche, wobei das Verfahren ein kontinuierliches Verfahren ist.

16. Verfahren nach einem der vorangehenden Ansprüche, wobei die Nüsse Haselnüsse sind.

17. Verfahren nach einem der vorangehenden Ansprüche, wobei der Energiegehalt der Nüsse mit reduziertem Fettgehalt nach dem Rösten mindestens 30% geringer als der Energiegehalt der ursprünglichen Nüsse mit vollem Fettanteil ist.

## Revendications

1. Procédé pour produire des noix à teneur réduite en matières grasses, comprenant les étapes suivantes : presser les noix pour enlever une proportion de l'huile qu'elles contiennent, exposer les noix appauvries en huile à l'humidité pour les hydrater à un degré désiré, sécher les noix hydratées pour les sécher à un degré désiré et ensuite, facultativement, les griller, procédé dans lequel au moins une partie du séchage et/ou du grillage, lorsqu'il est en cours, est effectuée en utilisant un rayonnement micro-ondes.

2. Procédé selon la revendication 1, dans lequel les noix appauvries en huile sont hydratées en les soumettant à la vapeur.

3. Procédé selon la revendication 2, dans lequel les noix sont soumises à une vapeur à une pression de 0,5 à 5,0 bars pendant une durée de 0,5 à 5,0 minutes et à une température comprise entre 90 et 150°C.

4. Procédé selon l'une quelconque des revendications 1 à 3, dans lequel l'étape d'hydratation comprend l'application aux noix humidifiées d'un vide pouvant atteindre 0,01 bar pendant une durée pouvant atteindre 5 minutes.

5. Procédé selon la revendication 4, dans lequel on applique un vide de 0,06 bar pendant 120 secondes.

6. Procédé selon l'une quelconque des revendications précédentes, dans lequel les noix appauvries en huile sont hydratées jusqu'à une teneur en humidité de 10 à 20 % en poids.

7. Procédé selon l'une quelconque des revendications précédentes, dans lequel les noix hydratées sont séchées en les soumettant à un rayonnement microondes d'une puissance comprise entre 250 et 5000 watts pendant une période comprise entre 0,5 et 5,0 minutes.

8. Procédé selon la revendication 7, dans lequel les noix hydratées sont séchées à une teneur en humidité d'environ 6 % en poids.

9. Procédé selon l'une quelconque des revendications précédentes, dans lequel les noix sont pressées pour enlever de 20 à 90 % en poids de l'huile qui est présente à l'origine.

10. Procédé selon la revendication 9, dans lequel 50 à 75 % en poids de l'huile présente à l'origine sont enlevées.

11. Procédé selon l'une quelconque des revendications précédentes, dans lequel, avant de presser les noix, celles-ci sont préalablement séchées jusqu'à une teneur en humidité comprise entre 3 et 8 % en poids.

12. Procédé selon l'une quelconque des revendications précédentes, comprenant l'étape dans laquelle on blanchit les noix appauvries en huile pour enlever leurs peaux avant hydratation.

13. Procédé selon l'une quelconque des revendications précédentes, dans lequel le grillage microondes est effectué à une puissance comprise entre 700 et 3000 watts jusqu'à ce que la teneur en humidité des noix grillées soit d'environ 1,5 % en poids.

14. Procédé selon l'une quelconque des revendications précédentes, dans lequel les noix séchées à teneur réduite en matières grasses sont revêtues d'au moins un agent d'aromatisation, un condiment, un agent de texturation ou un liant.

15. Procédé selon l'une quelconque des revendications précédentes, dans lequel le procédé est un procédé en continu.

16. Procédé selon l'une quelconque des revendications précédentes, dans lequel les noix sont des noisettes.

17. Procédé selon l'une quelconque des revendications précédentes, dans lequel la teneur énergétique des noix à teneur réduite en matières grasses est, après grillage, au moins 30 % inférieure à la teneur énergétique des noix à teneur complète en matières grasses à l'origine.
